Europäisches Patentamt

European Patent Office

Office européen des brevets

(11) Veröffentlichungsnummer: **0 082 800**
**A1**

(12) **EUROPÄISCHE PATENTANMELDUNG**

(21) Anmeldenummer: 82730135.9

(22) Anmeldetag: 13.11.82

(51) Int. Cl.³: **H 04 M 3/30**

(30) Priorität: 05.12.81 DE 3148740

(43) Veröffentlichungstag der Anmeldung:
29.06.83 Patentblatt 83/26

(84) Benannte Vertragsstaaten:
AT CH FR GB LI NL

(71) Anmelder: Fritz Kuke KG
Am Juliusturm 71-73
D-1000 Berlin 20(DE)

(72) Erfinder: Seeger, Günter A.
Heidelberger Landstrasse 341
D-6100 Darmstadt-Eberstadt(DE)

(74) Vertreter: Diehl, Paul
Alt-Moabit 89
D-1000 Berlin 21(DE)

(54) **Abschluss für Fernsprechleitungen.**

(57) Die Erfindung betrifft einen Abschluß für Fernsprechanschlußleitungen in Parallelschaltung zum Fernsprechapparat.

Der Erfindung liegt die Aufgabe zugrunde, einen Leitungsabschluß zu schaffen, der ohne daß ein Ruhekontakt
benötigt wird, ein Prüfen der Teilnehmeranschlußleitung
ermöglicht, auch wenn der entsprechende Fernsprechapparat vom Fernsprechnetz getrennt ist.

Erfindungsgemäß wird diese Aufgabe gelöst durch ein
elektrisches oder elektronisches Bauteil, das eine oberhalb
der Betriebsspannung des Fernsprechnetzes liegende Prüfspannungsschwelle bestimmt.

Durch die erfindungsgemäße Vorgabe einer oberhalb
der Betriebsspannung des Fernsprechnetzes liegenden Prüfspannungsschwelle wird der bisher stets benötigte Ruhekontakt überflüssig: Bei Betriebsspannung des Fernsprechnetzes ist der Leitungsabschluß stromlos, kann also den Ruf-
und Sprechstrom nicht dämpfen.

EP 0 082 800 A1

Croydon Printing Company Ltd.

- 1 -

Abschluß für Fernsprechleitungen

Die Erfindung betrifft einen Abschluß für Fernsprechanschlußleitungen in Parallelschaltung zum Fernsprechapparat.

Derartige Leitungsabschlüsse sind erforderlich für Fernsprecheinrichtungen, in denen der Fernsprechapparat über
einen Stecker wahlweise von dem Fernsprechnetz getrennt
werden kann. Ist der Fernsprechapparat eines Anschlusses
von Fernsprechnetz getrennt worden, so ergäbe die routinemäßige Überprüfung sämtlicher Anschlüsse für diesen Anschluß eine Fehleranzeige, die eine Reparaturmaßnahme auslösen würde, wenn nicht ein Zweitwecker in Parallelschaltung
zum Fernsprechapparat vorgesehen wäre, der dann, wenn der
Fernsprechapparat-Stecker gezogen wird, über einen besonderen, durch diesen betätigten Ruhekontakt an das Fernsprechnetz gelegt wird. Bei Einsatz der Prüfschaltung
spricht dann, trotz abgetrennten Fernsprechapparates, der
als Leitungsabschluß geschaltete Zweitwecker an.

Der Ruhekontakt hat naturgemäß einen bestimmten Raumbedarf
innerhalb der Anschlußdose. Auch dann, wenn der Leitungsabschluß, abweichend von den allgemeinen Betriebsvorschriften der Bundespost, ohne Zweitwecker ausgerüstet werden
darf, muß die Anschlußdose mit einem Ruhekontakt versehen
sein, der den Leitungsabschluß von dem angeschlossenen
Fernsprechapparat trennt, weil andernfalls eine unerwünschte Dämpfung des Ruf- oder Sprechstromes durch die Kapazität
des Leitungsabschlusses in Kauf genommen werden müßte.

Der Erfindung liegt die Aufgabe zugrunde, einen Leitungsabschluß zu schaffen, der ohne daß ein Ruhekontakt benötigt

- 2 -

wird, ein Prüfen der Teilnehmeranschlußleitung ermöglicht, auch wenn der entsprechende Fernsprechapparat vom Fernsprechnetz getrennt ist.

Erfindungsgemäß wird diese Aufgabe gelöst durch ein elektrisches oder elektronisches Bauteil, das eine oberhalb der Betriebsspannung des Fernsprechnetzes liegende Prüfspannungsschwelle bestimmt.

Durch die erfindungsgemäße Vorgabe einer oberhalb der Betriebsspannung des Fernsprechnetzes liegenden Prüfspannungsschwelle wird der bisher stets benötigte Ruhekontakt überflüssig: Bei Betriebsspannung des Fernsprechnetzes ist der Leitungsabschluß stromlos, kann also den Ruf- und Sprechstrom nicht dämpfen. Ist die Steckverbindung des Fernsprechapparates jedoch getrennt, so erfolgt bei Anliegen der Prüfspannung, die, wie bereits erwähnt, etwas oberhalb der Betriebsspannung des Fernsprechnetzes liegen muß, die Anzeige, daß der überprüfte Fernsprechanschluß am Netz liegt.

Die routinemäßige Überprüfung sämtlicher Fernsprechanschlüsse durch den Betreiber des Fernsprechnetzes muß jetzt lediglich in der Weise erfolgen, daß derjenige Abschluß, der bei Anlegen der normalen Prüfspannung nicht anspricht, zusätzlich an die etwas höhere Prüfspannung gelegt wird; erst wenn auch bei erhöhter Prüfspannung kein Strom fließt, ist der betreffende Anschluß gestört. In Weiterbildung der Erfindung wird die erhöhte Prüfspannungsschwelle durch zwei gegeneinandergeschaltete Zenerdioden eingestellt, denen ein Strombegrenzer zugeordnet ist. Damit läßt sich die Prüfspannung auf jeden beliebigen Wert oberhalb der Betriebsspannung des Fernsprechnetzes einstellen.

- 3 -

Als Strombegrenzer kann entweder ein Ohmscher Widerstand oder ein Kondensator eingesetzt werden.

Da der erfindungsgemäße Abschluß nur einen äußerst geringen Platzbedarf hat, kann er z.B. ohne Schwierigkeiten zusätzlich in dem Gehäuse einer herkömmlichen Verbindungs- oder Anschlußdose untergebracht werden, zumal deren Installationsraum wegen der zunehmenden Miniaturisierung der Schalter nicht mehr voll ausgenutzt wird.

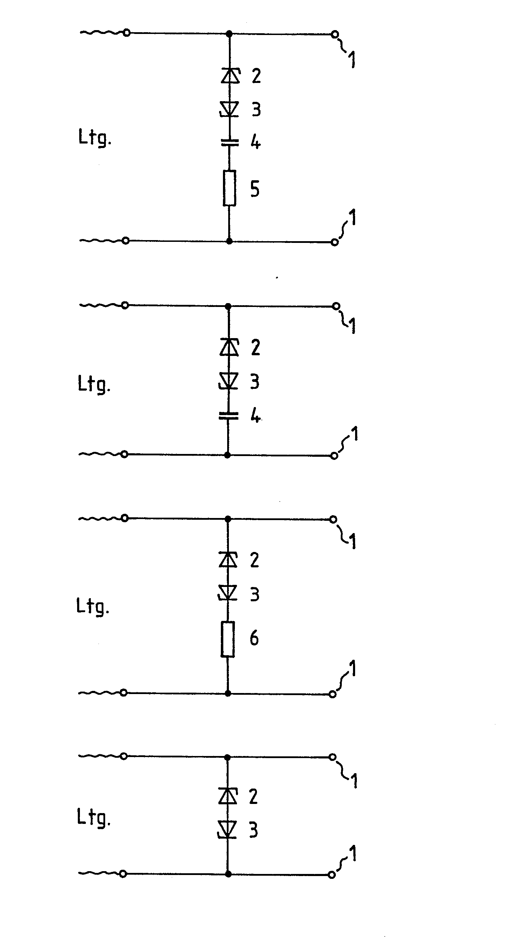

Die Erfindung wird im folgenden unter Bezugnahme auf die in der Zeichnung dargestellten Ausführungsbeispiele der Schaltung eines erfindungsgemäßen Abschlusses für Fernsprechanschlußleitungen näher erläutert.

Es sind die Schaltpläne von vier verschiedenen Fernsprechleitungs-Abschlüssen dargestellt, die in der Reihenfolge von oben nach unten betrachtet folgende Abschlusse zeigen:

Der oberste an den Fernsprechanschlußklemmen 1 liegende Abschluß besteht aus der Reihenschaltung von zwei Zenerdioden 2 und 3, dem Kondensator 4 und dem Ohmschen Widerstand 5.

Darunter ist ein Abschluß mit zwei Zenerdioden und einem damit in Reihe geschalteten Kondensator 4 wiedergegeben. Die folgende Darstellung zeigt die Reihenschaltung zweier Zenerdioden und eines Ohmschen Widerstandes 6, während die unterste Darstellung einen Abschluß zeigt, der nur aus den beiden Zenerdioden 2 und 3 besteht. Diese einfachste Form des Abschlusses kann nur angewendet werden, wenn der Ohmsche und der induktive Widerstand der Zuleitung zur Strombegrenzung ausreichen.

- 4 -

A n s p r u c h e :

1. Abschluß für Fernsprechleitungen in Parallelschaltung zum Fernsprechapparat, g e k e n n z e i c h n e t durch ein elektrisches oder elektronisches Bauteil, das eine oberhalb der Betriebsspannung des Fernsprechnetzes liegende Prüfspannungsschwelle bestimmt.

2. Abschluß nach Anspruch 1, g e k e n n z e i c h n e t durch zwei gegeneinander geschaltete Zenerdioden (2,3) und mindestens ein Strombegrenzungselement (4,5).

3. Abschluß nach Anspruch 1 und 2, dadurch g e k e n n - z e i c h n e t, daß als Strombegrenzungselement ein Ohmscher Widerstand (6) dient.

4. Abschluß nach Anspruch 1 und 2, dadurch g e k e n n - z e i c h n e t, daß als Strombegrenzungselement ein Kondensator (4) dient.

5. Abschluß nach Anspruch 1 - 4, g e k e n n z e i c h - n e t durch die Anordnung innerhalb einer Anschluß- einrichtung für Fernmeldeeinrichtungen.

1/1

**0082800**
Nummer der Anmeldung

**EUROPÄISCHER RECHERCHENBERICHT**

Europäisches
Patentamt

EP 82 73 0135

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 660 620 (SCHIMPF) <br> * Spalte 4, Zeile 12 bis Spalte 6, Zeile 4 * | 1-3 | H 04 M 3/30 |
| | ----- | | |
| | | | **RECHERCHIERTE SACHGEBIETE (Int. Cl. ³)** <br><br> H 04 M 3/30 <br> H 04 Q 1/18 |

Der vorliegende Recherchenbericht wurde für alle Patentansprüche erstellt.

| Recherchenort <br> DEN HAAG | Abschlußdatum der Recherche <br> 07-03-1983 | Prüfer <br> VANDEVENNE M.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82